**Europäisches Patentamt**

**European Patent Office**

**Office européen des brevets**

(11) Veröffentlichungsnummer: **0 104 276**
**B1**

(12) **EUROPÄISCHE PATENTSCHRIFT**

(45) Veröffentlichungstag der Patentschrift:
**18.12.85**

(51) Int. Cl.⁴: **H 02 H 9/04, H 03 K 17/292**

(21) Anmeldenummer: **82201188.8**

(22) Anmeldetag: **23.09.82**

(54) **Elektronische Zerhackerschaltung und Verfahren zu deren Betrieb.**

(43) Veröffentlichungstag der Anmeldung:
**04.04.84 Patentblatt 84/14**

(45) Bekanntmachung des Hinweises auf die Patenterteilung:
**18.12.85 Patentblatt 85/51**

(84) Benannte Vertragsstaaten:
**CH DE FR IT LI NL**

(56) Entgegenhaltungen:
**DE - A - 2 132 380**
**DE - B - 1 273 049**
**US - A - 3 198 989**

**Soviet Inventions Illustrated Week C 17, 4 June 1980
Section R 51
BROWN BOVERI REVIEW, Band 66, nr. 1, Februar 1979
P. DE BRUYNE et al. "The reverse conducting thyristor
and its applications", Seiten 5-10**

(73) Patentinhaber: **BBC Aktiengesellschaft Brown, Boveri &
Cie., Haselstrasse, CH-5401 Baden (CH)**

(72) Erfinder: **Vitins, Janis, Dr., Sulzbergstrasse 7B,
CH-5430 Wettingen AG (CH)**

## Beschreibung

Die Erfindung betrifft eine elektronische Zerhackerschaltung gemäss dem Oberbegriff des Anspruchs 1 sowie ein Verfahren zu deren Betrieb.

Eine solche Schaltung ist z.B. aus dem Buch von F. Zach, Leistungselektronik, Springer-Verlag, 1979, S. 261, bekannt. Sie wird für Gleichstromsteller oder Zerhacker zur Regelung der Gleichspannung in Umrichtern mit Gleichspannungszwischenkreisen verwendet. Sie setzt sich im wesentlichen aus dem Hauptthyristor und einem zugehörigen Löschkreis zusammen, der als steuerbarer Schwingkreis aufgebaut ist. Solange der Hauptthyristor blockiert, wird der Löschkondensator über die Ladediode von der am Eingang liegenden Spannung aufgeladen. Der Stellvorgang beginnt mit der Zündung des Hauptthyristors durch einen Zündimpuls auf den Steuereingang. Der Löschthyristor blockiert zu diesem Zeitpunkt und verhindert so eine Entladung bzw. Umladung des Löschkondensators. Die Eingangsspannung treibt über den Hauptthyristor einen Strom durch den Lastwiderstand. Der Stellvorgang endet mit der Zündung des Löschthyristors durch einen Zündimpuls auf seinen Steuereingang. Der geladene Löschkondensator schwingt dann über den Löschthyristor und die Löschinduktivität um und bewirkt beim Zurückschwingen im Hauptthyristor eine sogenannte „weiche" Löschung.

Bei vorgegebener Eingangsspannung ergibt sich die mittlere Spannung am Lastwiderstand bei periodischem Zerhackerbetrieb durch das Verhältnis von Einschaltzeit zu Periodendauer, dem Stellverhältnis. Das Stellverhältnis wird von der zeitlichen Abfolge der Zündimpulse für Haupt- und Löschthyristor bestimmt. Die Zündimpulse ihrerseits werden in einer externen Steuerlogik nach Massgabe der gewünschten mittleren Ausgangsspannung erzeugt. Um die bekannte Schaltung daher zur Begrenzung der Eingangsspannung einzusetzen, ist eine aufwendige Mess- und Steuerelektronik notwendig, die aus dem Wert der anliegenden Eingangsspannung eine zur Spannungsbegrenzung geeignete Zündimpulsfolge für Haupt- und Löschthyristor herleitet.

Der Erfindung liegt daher die Aufgabe zugrunde, eine einfache, elektronische Zerhackerschaltung zu schaffen, die ohne aufwendige externe Mess- und Steuerelektronik im autonomen Betrieb zur Begrenzung einer am Eingang liegenden Spannung verwendet werden kann.

Die Aufgabe wird dadurch gelöst, dass bei der eingangs erwähnten Zerhackerschaltung die Merkmale aus dem Kennzeichen des Anspruchs 1 vorgesehen sind. In einem bevorzugten Ausführungsbeispiel der Erfindung bestehen die Kippschaltungen aus einer Kippdiode und einem Vorwiderstand, während das Zeitglied als Serienschaltung aus einem Zeitwiderstand und einem Zeitkondensator ausgeführt ist. Auf diese Weise lässt sich die Schaltung besonders einfach und zuverlässig aufbauen.

Bei dem Verfahren zum Betrieb der erfindungsgemässen Zerhackerschaltung wird der Hauptthyristor bei Überschreiten eines festgelegten Wertes der Eingangsspannung durch die erste Kippschaltung gezündet und im Anschluss daran werden nach einer durch das Zeitglied festgelegten Zeitspanne der Löschthyristor durch die zweite Kippschaltung gezündet und der Hauptthyristor durch ein Umschwingen des Löschkondensators gelöscht.

Die Erfindung wird nachfolgend anhand der Zeichnung in einem Ausführungsbeispiel beschrieben und näher erläutert. Es zeigen:

Fig. 1 den prinzipiellen Aufbau der erfindungsgemässen Schaltung;

Fig. 2 ein bevorzugtes Ausführungsbeispiel der Schaltung nach Fig. 1.

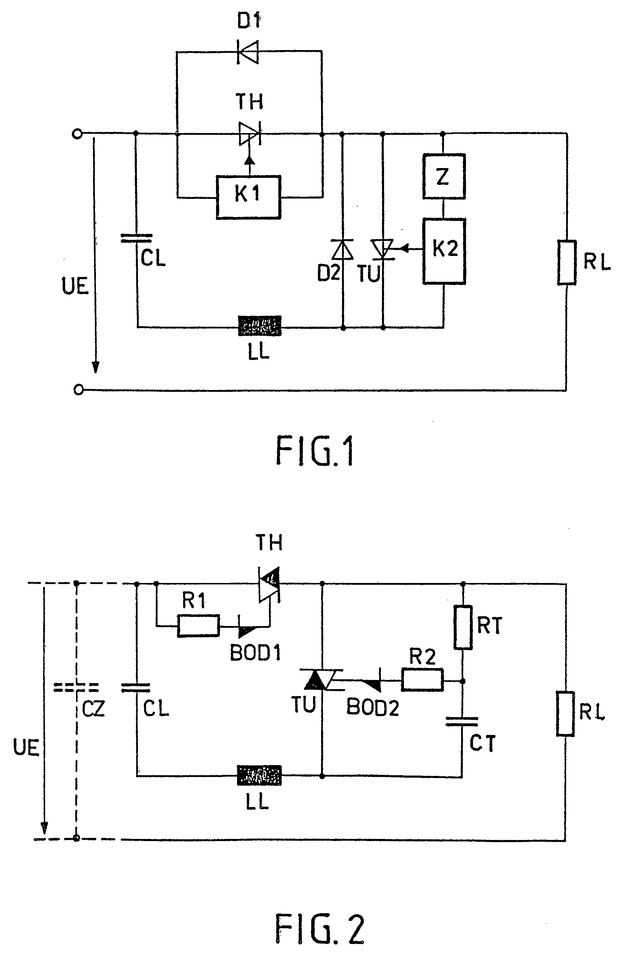

Der prinzipielle Aufbau der erfindungsgemässen, elektronischen Zerhackerschaltung ist in Fig. 1 dargestellt. Ein Lastwiderstand RL ist über einen in Durchlassrichtung angeordneten Hauptthyristor TH mit einer antiparallelen Löschdiode D1 mit dem Eingang der Schaltung verbunden, an dem die zu begrenzende Eingangsspannung UE liegt. Parallel zum Hauptthyristor TH ist eine erste Kippschaltung K1 geschaltet, die mit zwei Eingängen die am Hauptthyristor TH abfallende Spannung misst und über einen Ausgang einen Zündimpuls auf den Steuereingang des Hauptthyristors TH gibt, wenn diese Spannung einen festgelegten Wert überschritten hat. Ebenfalls parallel zu TH ist ein Löschkreis angeordnet, der aus einem Serienschwingkreis mit einem Löschkondensator CL und einer Löschinduktivität LL besteht und durch die antiparallele Kombination aus einer Ladediode D2 und einem Löschthyristor TU erzeugt wird. Ähnlich wie der Hauptthyristor TH wird auch der Löschthyristor TU durch den Ausgangsimpuls einer zweiten Kippschaltung K2 gezündet, die zusammen mit einem Zeitglied Z von der am Löschthyristor TU abfallenden Spannung gesteuert wird.

Der funktionelle Ablauf ist unmittelbar aus der Schaltungsanordnung ersichtlich. Im Normalbetrieb, wenn die Eingangsspannung UE den durch die erste Kippschaltung K1 festgelegten Wert nicht überschreitet und daher nicht begrenzt zu werden braucht, blockiert der Hauptthyristor TH, so dass an ihm die volle Eingangsspannung UE abfällt. Der Löschkondensator CL kann sich daher über die Ladediode D2 im Normalbetrieb auf eine für die Löschung ausreichende Spannung aufladen.

Sobald die Eingangsspannung UE den Ansprechwert der ersten Kippschaltung K1 überschreitet, wird der Hauptthyristor gezündet, so dass sich die Überspannung am Eingang durch einen Stromfluss über den Lastwiderstand RL abbauen kann. Zugleich mit der Zündung des Hauptthyristors erhöht sich die Spannung am Löschthyristor TU sprunghaft auf den Wert von CL. Dieser Spannungssprung wird, durch das Zeitglied Z um eine bestimmte Zeitspanne verzögert, an die zweite Kippschaltung K2 weitergegeben, deren Ansprechwert damit überschritten wird. Dies führt zur Zündung des Löschthyristors, die einen Schwingungsvorgang des Serienschwingkreises aus Löschkondensator CL und Löschinduktivität LL einleitet. Die Umladung von CL erfolgt über den Löschthyristor TU, das Zurückschwingen dagegen verläuft über die Ladediode D2 und die Löschdiode D1 und bewirkt einen Stromnulldurchgang im Hauptthyristor TH und damit dessen Löschung. Insgesamt ergibt sich ein Stromimpuls durch den Lastwiderstand RL mit einer Impulsdauer, die durch die interne Konstante des Zeitgliedes Z festgelegt ist.

Sobald der Hauptthyristor TH nach Beendigung des Löschvorganges seine Sperrfähigkeit wiedererlangt hat, liegt die erste Kippschaltung wiederum an der vollen Eingangsspannung UE. Ist die Überspannung durch den einen Stromimpuls nicht vollständig abgebaut worden, beginnt dann erneut der beschriebene Leitzyklus und bewirkt einen weiteren Stromimpuls durch den Lastwiderstand RL. Auf diese Weise werden so lange eine Folge von Leitzyklen durchlaufen und Stromimpulse abgegeben, bis die Überspannung am Eingang abgebaut ist.

Der besondere Vorteil der erfindungsgemässen Schaltung besteht darin, dass sie ohne externe Steuerung in abgeschlossener Weise aufgebaut werden kann. Dies ist gerade in den Betriebsfällen wichtig, in denen die zu begrenzende Überspannung durch Störungen im Gesamtsystem hervorgerufen wird. Da die Schaltung autonom ist, wird sie durch solche Störungen in ihrer Funktion nicht beeinträchtigt, sondern reagiert ausschliesslich nach Massgabe der am Eingang liegenden Spannung UE. Dadurch ergibt sich eine Begrenzerschaltung mit hoher Funktionssicherheit und Leistungsfähigkeit, die durch die Verwendung nur weniger Bauelemente noch verstärkt werden.

Besondere Bedeutung kommt den Kippschaltungen K1 und K2 zu, die für die autonome Steuerung der Thyristoren TH und TU verantwortlich sind. In einem bevorzugten Ausführungsbeispiel, wie es in Fig. 2 wiedergegeben ist, bestehen die Kippschaltungen aus Kippdioden oder Break-Over-Dioden BOD1 und BOD2 entsprechenden, strombegrenzenden Vorwiderständen R1 und R2. Der Kippzweig aus Vorwiderstand R1 und Kippdiode BOD1 ist im Falle des Hauptthyristors TH direkt zwischen Anode und Steuereingang (Gate) geschaltet. Im Falle des Löschthyristors TU liegen R2 und BOD2 zwischen dem Steuereingang und dem Mittelabgriff des Zeitgliedes Z, das sich aus einem Zeitkondensator CT und einem Zeit- oder Ladewiderstand RT zusammensetzt.

Die Kippspannung der ersten Kippdiode BOD1 bestimmt direkt die Ansprechspannung der Zerhackerschaltung. Sobald dieser Spannungswert von der Eingangsspannung UE überschritten wird, setzt in der Kippdiode der kontrollierte Durchbruch ein und zündet den Hauptthyristor TH. Der bereits beschriebene Spannungssprung am Löschthyristor TU, der unmittelbar auf die Zündung von TH folgt, erscheint gleichfalls am Zeitglied Z. Die Spannung $U_{CT}$ am Zeitkondensator wächst gemäss der Gleichung

$$U_{CT} = U_{TU} \times (1 - \exp(-t/R_{RT} \times C_{CT}))$$

exponentiell mit der Zeit t auf die Spannung $U_{TU}$ am Löschthyristor. Die Zeitkonstante für diesen Vorgang ergibt sich in üblicher Weise aus dem Produkt des Widerstandswertes $R_{RT}$ und der Kapazität $C_{CT}$ des Zeitgliedes. Die Kippspannung der zweiten Kippdiode BOD2 ist so gewählt, dass sie in endlicher Zeit von der Spannung $U_{CT}$ am Zeitkondensator CT überschritten wird. Wenn diese Bedingung erfüllt ist, setzt auch hier der kontrollierte Durchbruch ein und zündet den Löschthyristor TU und leitet damit den bereits beschriebenen Löschvorgang ein.

Die Schaltung kann weiter vereinfacht und in ihrem Schaltverhalten verbessert werden, wenn als Thyristoren die sogenannten rückwärts leitenden Thyristoren (RLT) eingesetzt werden, wie dies aus Fig. 2 hervorgeht. Dann sind Ladediode D2 und Löschthyristor TU sowie Löschdiode D1 und Hauptthyristor TH jeweils in einem Bauelement zusammengefasst. Zudem weisen rückwärts leitende Thyristoren bessere elektrische Werte auf.

Die Funktion einer Zerhackerschaltung gemäss Fig. 2 wurde erfolgreich erprobt, wobei eine erste Kippdiode BOD1 mit einer Ansprech- oder Kippspannung von 800 V und eine zweite Kippdiode BOD2 mit einer Kippspannung von 450 V verwendet wurde. Die Höhe des Stromimpulses in der Leitphase betrug dabei 200 A.

Die erfindungsgemässe Zerhackerschaltung eignet sich als allgemeiner, wartungsarmer Überspannungsschutz mit hohem Leistungsvermögen. Insbesondere kann sie in Traktions- und Industrieanwendungen als Überspannungsschutz und auch als Bremsregler im Zwischenkreis von Wechselrichtern mit eingeprägter Spannung oder, wie in Fig. 2 gestrichelt eingezeichnet, am Zwischenkreiskondensator CZ im Eingangskreis von Gleichstromstellern verwendet werden. Ihre besonderen Vorteile ergeben sich aus dem autonomen Betrieb ohne externe Steuerung oder Versorgung sowie aus dem einfachen und störsicheren Aufbau aus bewährten Leistungshalbleitern.

## Patentansprüche

1. Elektronische Zerhackerschaltung, insbesondere zur Spannungsbegrenzung in Leistungskreisen, bei der ein Lastwiderstand (RL) über einen Hauptthyristor (TH) mit einer antiparallelen Löschdiode (D1) an eine Eingangsspannung (UE) angeschlossen ist und parallel zum Hauptthyristor (TH) ein Löschkreis mit einem Löschkondensator (CL), einer Löschinduktivität (LL) und einer antiparallelen Kombination aus einer Ladediode (D2) und einem Löschthyristor (TU) geschaltet ist, dadurch gekennzeichnet, dass parallel zum Hauptthyristor (TH) eine erste spannungsabhängige Kippschaltung (K1) und parallel zum Löschthyristor (TU) eine zweite spannungsabhängige Kippschaltung (K2) mit einem Zeitglied (Z) geschaltet, und ein Ausgang der ersten Kippschaltung (K1) mit dem Steuereingang des Hauptthyristors (TH) und ein Ausgang der zweiten Kippschaltung (K2) mit dem Steuereingang des Löschthyristors (TU) verbunden sind.

2. Elektronische Zerhackerschaltung nach Anspruch 1, dadurch gekennzeichnet, dass die Ladediode (D2) und der Löschthyristor (TU) in einem rückwärts leitenden Thyristor zusammengefasst sind.

3. Elektronische Zerhackerschaltung nach Anspruch 2, dadurch gekennzeichnet, dass die Löschdiode (D1) und der Hauptthyristor (TH) in einem rückwärts leitenden Thyristor zusammengefasst sind.

4. Elektronische Zerhackerschaltung nach Anspruch 1, dadurch gekennzeichnet, dass die erste Kippschaltung (K1) aus einer ersten Kippdiode (BOD1) und einem ersten Vorwiderstand (R1) besteht.

5. Elektronische Zerhackerschaltung nach Anspruch 4, dadurch gekennzeichnet, dass die zweite Kippschaltung (K2) aus einer zweiten Kippdiode (BOD2) und einem zweiten Vorwiderstand (R2) besteht und das Zeitglied (Z) als Serienschaltung aus einem Zeitwiderstand (RT) und einem Zeitkondensator (CT) ausgeführt ist.

6. Verfahren zum Betrieb einer elektronischen Zerhackerschaltung nach Anspruch 1, dadurch gekennzeichnet, dass der Hauptthyristor (TH) bei Überschreiten eines festgelegten Wertes der Eingangsspannung (UE) durch die erste Kippschaltung (K1) gezündet wird und im Anschluss daran nach einer durch das Zeitglied (Z) festgelegten Zeitspanne der Löschthyristor (TU) durch die zweite Kippschaltung (K2) gezündet und der Hauptthyristor (TH) durch ein Umschwingen des Löschkondensators (CL) gelöscht werden.

## Claims

1. Electronic chopper circuit, particularly for voltage limiting in power circuits, in which one load resistance (RL) is connected via a main thyristor (TH) provided with an antiparallel quenching diode (D1) to an input voltage (UE) and a quenching circuit comprising a quenching capacitor (CL), a quenching ductance (LL) and an antiparallel combination consisting of a charging diode (D2) and a quenching thyristor (TU) is connected in parallel with the main thyristor (TH), characterized in that a first voltage-dependent sawtooth circuit (K1) is connected in parallel with the main thyristor (TH) and a second voltage-dependent sawtooth circuit (K2) with a timing section (Z) is connected in parallel with the quenching thyristor (TU), and an output of the first sawtooth circuit (K1) is connected to the gating input of the main thyristor (TH) and an output of the second sawtooth circuit (K2) is connected to the gating input of the quenching thyristor (TU).

2. Electronic chopper circuit according to Claim 1, characterized in that the charging diode (D2) and the quenching thyristor (TU) are combined in a reverse-conducting thyristor.

3. Electronic chopper circuit according to Claim 2, characterized in that the quenching diode (D1) and the main thyristor (TH) are combined in a reverse-conducting thyristor.

4. Electronic chopper circuit according to Claim 1, characterized in that the first sawtooth circuit (K1) consists of a first sawtooth diode (BOD1) and a first series resistance (R1).

5. Electronic chopper circuit according to Claim 4, characterized in that the second sawtooth circuit (K2) consists of a second sawtooth diode (BOD2) and a second series resistance (R2) and that the timing section (Z) is constructed as a series circuit consisting of a timing resistance (RT) and a timing capacitor (CT).

6. Method for operating an electronic chopper circuit according to Claim 1, characterized in that the main thyristor (TH) is fired by the first sawtooth circuit (K1) when a predetermined value of the input voltage (UE) is exceeded and subsequently the quenching thyristor (TU) is fired by the second sawtooth circuit (K2) after a period of time established by the timing section (Z), and the main thyristor (TH) is quenched by a charge reversal of the quenching capacitor (CL).

## Revendications

1. Circuit hacheur électronique, en particulier pour limiter la tension dans des circuits de puissance, dans lequel une résistance de charge (RL) est connectée par l'intermédiaire d'un transistor principal (TH) avec une diode d'extinction antiparallèle (D1) à une tension d'entrée (UE) et un circuit d'extinction avec un condensateur d'extinction (CL), une inductance d'extinction (LL) et un montage antiparallèle d'une diode de charge (D2) et d'un thyristor d'extinction (TU) est connecté en parallèle au thyristor principal (TH), caractérisé en ce qu'une première bascule dépendant de la tension (K1) et, parallèle au thyristor d'extinction (TU), une seconde bascule dépendant de la tension (K2) avec un élément à temps (Z) sont connectées en parallèle au transistor principal (TH) et une sortie de la première bascule (K1), ainsi qu'une sortie de la seconde bascule (K2) sont connectées à l'entrée de commande du thyristor d'extinction (TU).

2. Circuit hacheur électronique suivant la revendication 1, caractérisé en ce que la diode de charge (D2) et le thyristor d'extinction (TU) sont groupés dans un thyristor à conduction inverse.

3. Circuit hacheur électronique suivant la revendication 2, caractérisé en ce que la diode d'extinction (D1) et le thyristor principal (TH) sont groupés en un thyristor à conduction inverse.

4. Circuit hacheur électronique suivant la revendication 1, caractérisé en ce que la première bascule (K1) est formée d'une première diode de bascule (BOD1) et d'une première résistance série (R1).

5. Circuit hacheur électronique suivant la revendication 4, caractérisé en ce que la seconde bascule (K2) est formée d'une seconde diode de bascule (BOD2) et d'une seconde résistance série (R2) et l'élément à temps (Z) est formé du montage en série d'une résistance de temps (RT) et d'un condensateur de temps (CT).

6. Procédé pour mettre en œuvre un circuit ha-

cheur électronique suivant la revendication 1, caractérisé en ce que le thyristor principal (TH), en cas de dépassement par excès d'une valeur fixe de la tension d'entrée (UE), est amorcé par la première bascule (K1), puis, après un intervalle de temps fixé par l'élément à temps (Z), le thyristor d'extinction (TU) est amorcé par la deuxième bascule (K2) et le thyristor principal (TH) est éteint par un déclenchement du condensateur d'extinction (Cl).

0 104 276

FIG.1

FIG.2

7